# EUROPEAN PATENT APPLICATION

(11) **EP 1 026 421 A2**
(43) Date of publication of application: **09.08.2000**
(21) Application number: 00300145.0
(22) Date of filing: 11.01.2000
(51) Int. Cl.: F16F 9/516, E05F 1/10, F16F 9/48, F16F 9/02

(54) **Gas spring**

(30) Priority: 27.01.1999 GB 9901631
(71) Applicant: DRAFTEX INDUSTRIES LIMITED, Edinburgh EH2 3AP, Scotland (GB)
(72) Inventor: Franceschetti, Gaelle, 25440 Quingey (FR)
(74) Representative: Mackenzie, Andrew Bryan

(57) **Abstract**

A gas compression spring for moving a member pivoted on a body from a first position corresponding to compression of the spring to a second position, comprising an arrangement of a piston rod (4) slidingly and sealingly extending outwardly of cylinder means (2) and carrying a piston (10) movable within the cylinder means (2); one of the piston rod (4) and the cylinder means (2) being adapted for connection to the body and the other thereof being adapted for connection to the member; the interior of the cylinder means being filled with gas under pressure and the piston (10) dividing the interior of the cylinder means (2) into a first chamber (20) defined at least by the head of the piston and a second chamber (22) through which the piston rod extends; the first and second chambers being interconnected by first gas flow means (24) arranged to permit a restricted gas flow between the first and second chambers during a predetermined portion of the stroke of the piston and by second gas flow means (36,38) providing a second restricted gas flow path for by-passing the piston (10) when the piston is outside the predetermined portion of its stroke and as the piston rod (4) is moved towards an outer piston rod position by an externally applied force, the piston (10) being axially movable on the piston rod (4) between an open position in which the second gas flow path (36,38) is open and a closed position in which the second gas flow path (36,38) is closed, the gas spring further comprising valve means (17) permitting gas pressure transfer between the first chamber and the second chamber when the piston rod (4) is moved towards an inner piston rod position by an externally applied force.

## Description

This invention relates to a gas compression spring for moving a member pivoted on a body from a first position corresponding to compression of the spring to a second position, a gas compression spring for moving a member pivoted on a body from a first position corresponding to compression of the spring to a second position, comprising an arrangement of a piston rod slidingly and sealingly extending outwardly of cylinder means and carrying a piston movable within the cylinder means; one of the piston rod and the cylinder means being adapted for connection to the body and the other thereof being adapted for connection to the member; the interior of the cylinder means being filled with gas under pressure and the piston dividing the interior of the cylinder means into a first chamber defined at least by the head of the piston and a second chamber through which the piston rod extends; the first and second chambers being interconnected by first gas flow means arranged to permit a restricted gas flow between the first and second chambers during a predetermined portion of the stroke of the piston and by second gas flow means providing a second restricted gas flow path for by-passing the piston when the piston is outside the predetermined portion of its stroke and as the piston rod is moved towards an outer piston rod position by an externally applied force, the piston being axially movable on the piston rod, the gas spring further comprising valve means permitting gas pressure transfer between the first chamber and the second chamber when the piston rod is moved towards an inner piston rod position by an externally applied force.

A gas spring of this type is known from GB-A-2087510 which describes a gas spring having a piston which has a movable piston ring to allow gas flow past the piston when the piston rod is being extended from the cylinder and a valve formed by an axially movable piston which allows gas flow through the piston as the piston rod is pushed into the cylinder.

According to a first aspect of the invention, the gas spring of the present invention is characterised by the piston being axially movable on the piston rod between an open position in which the second gas flow path is open and a closed position in which the second gas flow path is closed.

According to a second aspect of the invention, there is provided a gas compression spring for moving a member pivoted on a body from a first position corresponding to compression of the spring to a second position, comprising an arrangement of a piston rod slidingly and sealingly extending outwardly of cylinder means and carrying a piston movable within the cylinder means; one of the piston rod and the cylinder means being adapted for connection to the body and the other thereof being adapted for connection to the member; the interior of the cylinder means being filled with gas under pressure and the piston dividing the interior of the cylinder means into a first chamber defined at least by the head of the piston and a second chamber through which the piston rod extends; the first and second chambers being interconnected by first gas flow means arranged to permit a restricted gas flow between the first and second chambers during a predetermined portion of the stroke of the piston and by second gas flow means providing a second restricted gas flow path for by-passing the piston when the piston is outside the predetermined portion of its stroke and as the piston rod is moved towards an outer piston rod position by an externally applied force, the gas spring further comprising second valve means permitting gas pressure transfer between the first chamber and the second chamber when the piston rod is moved towards an inner piston rod position by an externally applied force, characterised by the second gas flow means comprising a pressure-sensitive first valve means integral with the piston and operable to permit gas flow through the piston when a predetermined pressure difference between the gas pressure in the first and second chambers is exceeded and, the first valve means including a valve closure axially movable on the piston rod between an open position in which flow through the first valve means between the chambers occurs and a closed position in which flow through the first valve means between the chambers does not occur, the valve closure being arranged to slide sealingly in the cylinder means.

According to a third aspect of the invention, there is provided a gas compression spring for moving a member pivoted on a body from a first position corresponding to compression of the spring to a second position, comprising an arrangement of a piston movable within cylinder means, the piston carrying a piston rod slidingly and sealingly extending outwardly of the cylinder means; one of the piston rod and the cylinder means being adapted for connection to the body and the other thereof being adapted for connection to the member; the interior of the cylinder means being filled with gas under pressure and the piston dividing the interior of the cylinder means into a first chamber defined at least by the head of the piston and a second chamber through which the piston rod extends; the first and second chambers being interconnected by first gas flow means arranged to permit a restricted gas flow between the first and second chambers during a predetermined portion of the stroke of the piston and by second gas flow means providing a second restricted gas flow path for by-passing the piston as the piston rod is moved towards an outer piston rod position by an externally applied force when the piston is outside the predetermined portion of its stroke, characterised by the gas spring further comprising second valve means, including a biassing arrangement which is arranged to press relatively hard piston sealing means against the interior of the cylinder means as the piston rod moves to an outer piston rod position thereby to effect sealing of the piston to the cylinder means, the piston sealing means being arranged to move axially as the piston rod moves to an inner piston rod position thereby permitting gas pressure transfer between the first chamber and the second chamber when the piston rod is moved towards an inner piston rod position by an externally applied force.

Embodiments of gas springs in accordance with the invention will now be described by way of example with reference to the drawings in which:
Figure 1 is an axial cross section of a gas spring;
Figure 2 is a radial section of the gas spring of Figure 1 along the line II-II;
Figure 3 is a radial section of the piston of Figure 1 along the line III-III;
Figure 4 is a schematic plot of spring force against piston rod extension for the gas spring Figure 1;
Figure 5 is a schematic plot of user-applied force against angle of opening of a vehicle door;
Figure 6 is a partial axial section of the gas spring of Figure 1 in a first position;
Figure 7 is a partial axial section of the gas spring of Figure 1 as the piston rod is moved to an outer piston rod position;
Figure 8 is a partial axial section of the gas spring of Figure 1 as the piston rod is moved further towards an outer piston rod position;
Figure 9 is a partial axial section of the gas spring of Figure 1 as the piston rod is moved towards an inner piston rod position;
Figure 10A is a schematic plot of spring force against piston rod extension for an alternative gas spring;
Figure 10B is a schematic plot of user-applied force against angle of vehicle door opening for the gas spring of Figure 10A;
Figure 11 is a partial axial section through a gas spring; and
Figure 12 is a partial axial section through another gas spring.

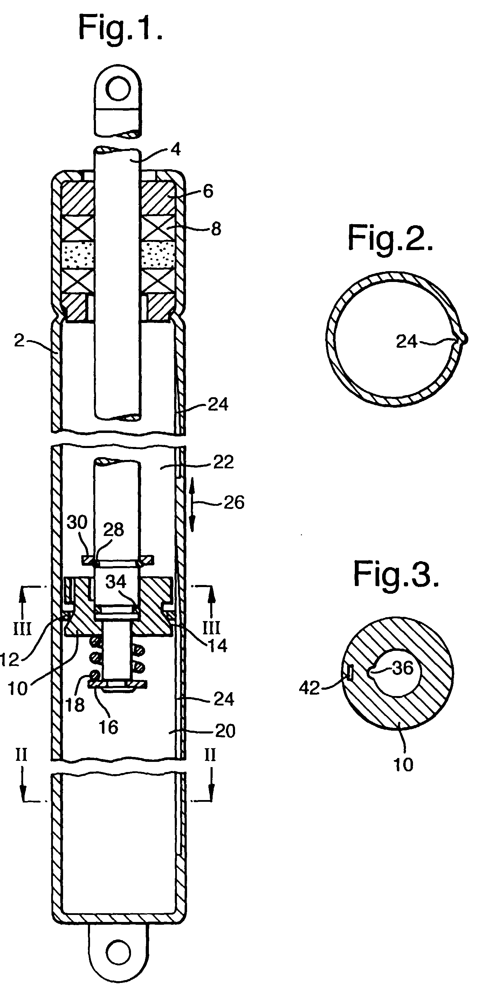

With reference to Figure 1, the gas spring comprises cylinder means 2 which is closed at one end. A piston rod 4 extends through the cylinder means 2 through a rod guide 6 out of the other end of the cylinder means 2. The cylinder means 2 contains gas at high pressure and therefore, the piston rod 4 is sealed using a lipped seal 8 which provides sealing between the piston rod 4 and the interior surface of the cylinder means 2.

The piston rod 4 carries a piston 10 which is sealed to the interior surface of the cylinder means 2 by a piston ring 12. The piston 10 has an inclined wedging surface 14 which has the effect of pushing the piston ring 12 radially outward into good sealing contact with the interior surface of the cylinder means 2 when the piston rod moves towards an outer piston rod position (generally upward in Figure 1). The operation of the wedging surface 14 is described in more detail below.

The piston 10 is free to move axially within predetermined limits on the piston rod 4. Its downward travel is limited by a washer 16 fixed to the distal end of the piston rod 4. A coil spring 18 acts between the head of the piston 10 and the limiting washer 16 generally to bias the piston 10 upward in the figure. In this upper position, no gas flow can occur through the piston. Thus, the cylinder means is divided into a first chamber 20 and a second chamber 22 by the piston 10.

A gas flow path between the chambers 20 and 22 is provided at intermittent positions along the cylinder means 2 by a longitudinal groove 24 formed in the interior surface of the cylinder means 2. The groove 24 is interrupted at the position marked 26 on the interior wall of the cylinder means 2.

The maximum extension of the piston rod 4 out of the cylinder means 2 is set by a retaining ring 28 and washer 30 fixed to the piston rod.

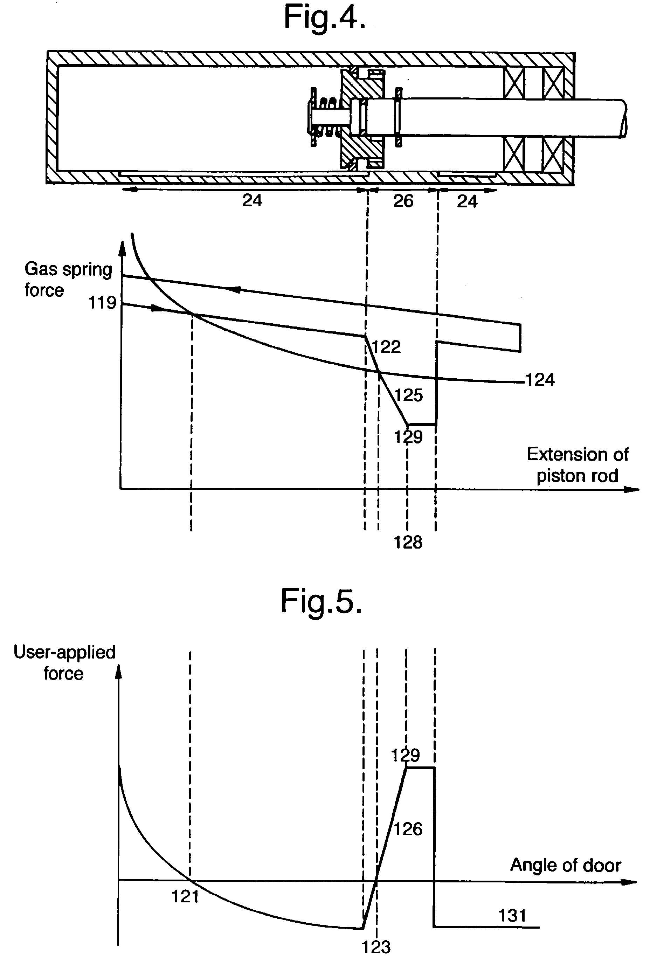

The operation of the gas spring will now be described with reference also to Figures 4 and 5.

Initially, let us assume that the vehicle door is closed and therefore that the piston rod 4 is largely contained within the cylinder means 2 generally as shown in Figure 1.

As the vehicle door is being opened, the piston rod 4 moves out of the cylinder towards an outer piston rod position. The piston 10 and therefore the piston ring 12 are situated adjacent the first part of the groove 24. This position is depicted at position 119 on the curve of Figure 4. As the rod moves outwardly, the piston ring 12 is urged by friction against the inner surface of the cylinder means 2, against the inclined wedging surface 14 of the piston 10. Gas flow can occur between the chambers 20 and 22 via the groove 24 and thus the pressure in the two chambers is equalized. As the piston rod 4 exits the cylinder means 2, the area of the piston 10 upon which the equalized pressure is exerted is greater on the side of the first chamber 20 than on the side of the second chamber 22. Thus, the gas pressure tends to assist opening of the vehicle door by pushing the piston rod 4 out of the cylinder means 2. By correctly choosing the gas pressure, piston areas and mounting angle of the gas spring on the vehicle door, it is possible to cause the vehicle door to open without any intervention on the part of the user after a small opening force has initially been applied by the user. The point at which the changeover between user-applied force and gas spring assistance occurs is depicted at position 121 on Figure 5 where the manual force exerted by the user becomes negative. The outgoing speed of the piston rod 4 is regulated by the flow of gas in the groove 24 and thus by gradually reducing the sectional area of the groove 24, the rate of extension of the piston rod 2 may be controllably reduced. This has the effect of bringing the vehicle door slowly to a halt; the halt occurring when the sectional area of the groove 24 becomes zero.

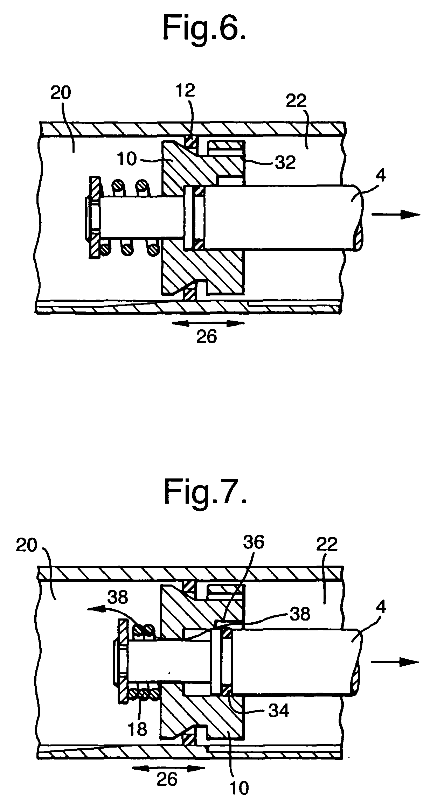

The halted situation is shown in Figure 6. In this position, the piston ring 12 seals against an ungrooved portion 26 of the cylinder means 2. The two chambers 20,22 are isolated from one another and thus the movement of the piston rod towards the right side of Figure 6 compresses the gas in the second chamber 22. Eventually, this excess pressure generates a force which opposes the outward movement of the piston rod 4 and the force overall generated by the gas spring reduces (as shown by the slope 122 in Figure 4). The torque exerted on the vehicle door by the gas spring reduces until it exactly balances the torque (produced by the weight of the vehicle door acting about the door hinge) of the vehicle door at which point movement of the piston rod 4 out of the cylinder means 2 stops. This is shown by point 123 in Figure 5 where the line representing gas spring force (or strictly speaking, its torque) crosses the line 124 which represents the torque of the vehicle door. The vehicle door is now held in a predetermined partially open position.

If the user wishes to open the vehicle door further, a further force must be applied in the vehicle door opening direction which has the effect of "lightening" the door. Thus, the torque exerted by the gas spring now becomes greater than the torque due to the weight of the door and the rod 4 and piston 10 more outwardly towards the guide 6 and seal 8. This has the effect of increasing the pressure in the second chamber 22 relative to the pressure in the first chamber 20. Eventually, the consequent pressure difference holds the piston 10 stationary in the cylinder means 2. However, since the piston 10 can move axially on the piston rod 4, the piston rod 4 is able to continue to be extended by the user (acting on the vehicle door) out of the cylinder means 2. This causes relative movement between the piston 10 and the piston rod 4. This relative movement compresses the coil spring 18. This is because the coil spring 18 is pushed by the user-applied force communicated to one end of the spring via the piston rod 4 but the other end of the coil spring 18 is held relatively stationary by the piston head, the axial movement of which is resisted by the pressure in the chamber 22 acting on the other surface 32 of the piston.

Compression of the coil spring 18 is shown by slope 125 in Figure 4.

Since the amount of force required to be applied by the user to enter the area of slope 125 is controlled entirely by the characteristics of the spring, complete control is provided over the characteristics of this part of the gas spring operation by adjusting the precompression of the spring and the stiffness of the spring.

Figure 5 shows that in this portion of the operation, the user applies a "positive" force as depicted by slope 126.

Eventually, (Figure 7) an O-ring 34 located in a groove on the piston rod 4, uncovers a groove 36 formed in the inner bore of the piston 10. This allows gas to flow through the piston between the piston 10 and the piston rod 4 as shown by arrow 38. In turn, this allows the gas pressures between the two chambers 20 and 22 to move towards an equalized pressure. However, full equalisation will not occur since when the user ceases to apply an additional force, the coil spring 18 will bring the O-ring 34 back into a sealing position to stop the flow between the chambers 20 and 22 and sealing occurs before the pressures are equalised.

The effect of the gas flow through the piston between the chambers, is to allow the piston rod to continue to move out of the cylinder means 2 through movement of the piston 10 through the cylinder means 2, without further build-up of pressure in the second chamber 22. The user-applied force which is required now levels off as shown by point 129 on Figures 4 and 5. The height of this "plateau" is governed by the force which is required to establish sufficient pressure difference between the chambers to overcome the biasing force of the coil spring 18. The necessary force may therefore be selected according to desired operation by selection of the characteristics of the spring 18.

In this mode of operation, the relative movement between the piston 10 and piston rod 4 stops and the combined arrangement moves along the cylinder means 2 towards the seal 8.

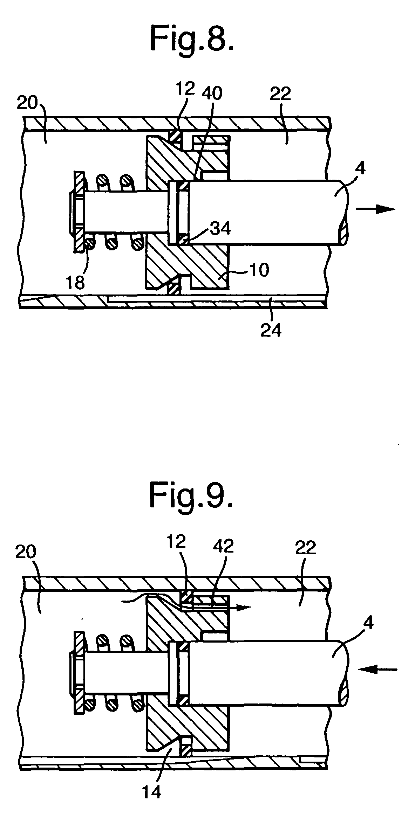

Eventually, the piston ring 12 moves to the position shown in Figure 8 where it is again over the grooved portion 24 of the interior surface of the piston means 2. This allows the pressures in the two chambers 20 and 22 to equalize. Thus, the "valve" in the piston closes, i.e. the piston 10 and piston rod 4 move relative to one another under the biasing force of the coil spring 18, and the O-ring 34 again moves over the ungrooved portion 40 of the inner bore of the piston 10 into the position shown in Figure 6.

Once the valve in the piston has closed, the torque exerted by the gas spring increases sharply and exceeds the torque due to the weight of the vehicle door. The vehicle door therefore continues to open without user intervention under the action of the gas spring as shown by the portion 131 of the slopes in Figures 4 and 5. Eventually, the washer 30 would come into contact with the seal and rod guide 8 and 6 at the end of the cylinder means 2. However, before this is allowed to happen, the groove 24 is discontinued which again causes the piston 10 and piston rod 4 to stop in the cylinder means 2.

As will be noted from the above, the valve formed by the coil spring 18, O-ring 34 and the groove 36 of the piston 10, allows good control of the maximum force to be applied by the user to go from the first stopping position to the second stopping position. The maximum forces are determined substantially by the point at which that valve opens which in turn is determined by the magnitude of the pressure differential between the chambers 20 and 22. The point at which the valve opens is therefore determined substantially by the characteristics of the coil spring 18. These characteristics are easy to control.

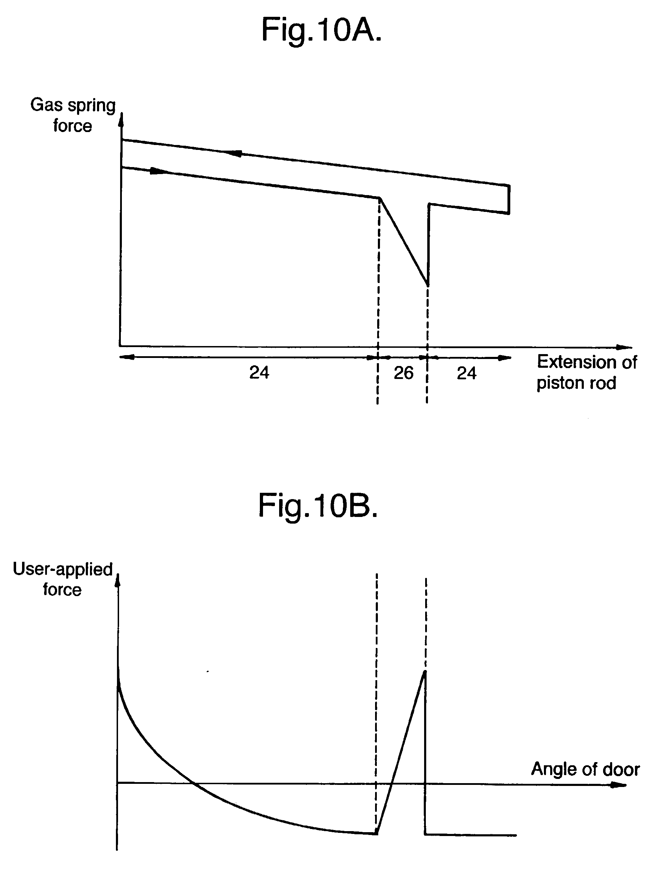

Figures 10A and 10B (which correspond to Figures 4 and 5) show the equivalent situation without such a valve. As will be seen, in the stopped position, the assistance provided by the gas spring in the stopped position continues to tail off throughout the ungrooved portion 26 of the cylinder means 2. Thus the force required to be exerted by the user continually increases until the second grooved region 24 is reached. Thus the only control over the manual force which must be exerted by the user is the length of the ungrooved portion 26. Manufacture of this interruption of the groove 26 is difficult to achieve with great precision and thus the maximum force which must be applied by the user is also difficult to control.

We now consider the position when the vehicle door is being closed. In this situation, the piston rod 4 begins to enter the cylinder means 2 and the piston ring 12 is moved by friction against the cylinder means 2 away from the inclined wedging surface 14.

This allows gas to flow past the surface 14 through a slot 42 formed in the piston 10. This allows the two chambers 20 and 22 to be in gas flow communication even in the ungrooved part of the cylinder 26. Thus closing of the hatch back can occur without an intermediate stop in the first position.

This arrangement has the advantage that a relatively stiff material may be used for the piston ring 12 which overcomes the common problem of the piston ring 12 entering the groove 24 and thereby completely or partially blocking the groove and preventing correct operation of the gas spring. This problem is particularly acute as temperature increases and tends to soften the piston ring 12. In this arrangement, a lower resilience material may be used since the wedging surface 14 provides a radial sealing force against the piston ring 12. This arrangement has the added advantage of allowing a convenient one-way operation of this sealing means to allow flow between the two chambers 20 and 22 as the piston rod returns into the cylinder means 2.

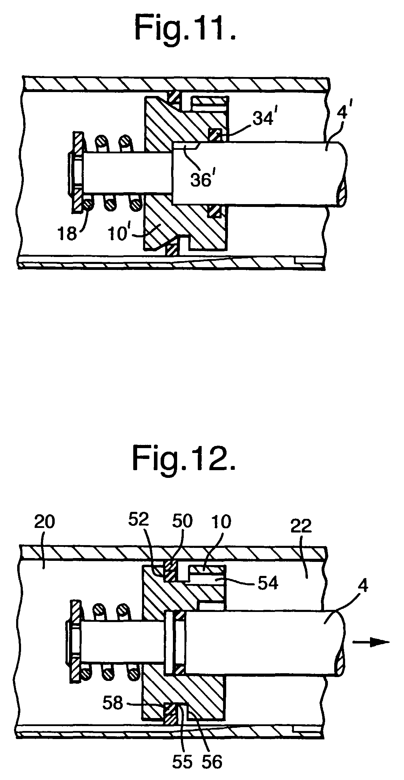

Figure 11 shows an alternative arrangement for the valve formed by the O-ring 34 and groove 36 of the preceding figures. In this arrangement, a groove 36' is formed in the piston rod 4' and the O-ring 34' is carried by the piston 10'. This follows the same principle of the previous embodiment of controlling the sealing between the piston and the piston rod. The operation is similar to that described above. Sealing and unsealing occurs as the piston 10' moves axially relative to the piston rod 4'.

Figure 12 shows an alternative embodiment for the sealing of the piston 10 to the interior surface of the cylinder means 2.

A relatively hard piston ring 50 covers a relatively soft and resilient material such as an O-ring 52. The piston ring 50 bears against the interior surface of the cylinder means 2 and forms a seal against that surface. Instead of the wedging surface 14 of the previous embodiments, this embodiment uses the resilience of the O-ring 52 to provide a radial sealing force against the internal diameter of the piston ring 50. The O-ring spreads the piston ring and improves its sealing against the cylinder means 2.

A passage 54 is provided in the piston 10 and is arranged to allow a flowpath through the piston when the piston ring 50 and O-ring 52 are over the opening to the passage 54. In the position shown in Figure 12, the O-ring 52 and piston ring 50 provide a seal between the piston 10 and the interior surface of the cylinder means 2; i.e. when the O-ring and piston ring are against the face 56 of the groove 55 in the piston 10, sealing does not occur, however, when they are against the face 58, sealing occurs.

It will be appreciated that by providing many interruptions to the groove 26, it is possible to cause the gas spring to have many intermediate stopping positions. Similarly, the cross-sectional area of the groove largely governs the speed of opening of the vehicle door. Alternatively, no interruption to the groove may be provided in which case the gas spring does not have an intermediate stopping position, or a substantial portion or the whole of the cylinder means 2 may be un-grooved in which case the gas spring operates to hold the vehicle door in whatever position it is left by a user; the force required to move the door being governed largely by the spring 18.

Typically, the relatively hard piston ring 50 and 12 may be made of a thermoplastics material. Thus, even partial entry into the groove 24 is largely avoided. This is advantageous since even partial entry into the groove affects the opening characteristics of the gas spring. The O-ring 52 may be formed from an elastomer or even a thermoplastics material (which is soft relative to the piston ring 50). The ring 50 and ring 52 may alternatively be an integral component formed by bi-injection moulding techniques.

## Claims

1. A gas compression spring for moving a member pivoted on a body from a first position corresponding to compression of the spring to a second position, comprising an arrangement of a piston rod (4) slidingly and sealingly extending outwardly of cylinder means (2) and carrying a piston (10) movable within the cylinder means (2); one of the piston rod (4) and the cylinder means (2) being adapted for connection to the body and the other thereof being adapted for connection to the member; the interior of the cylinder means being filled with gas under pressure and the piston (10) dividing the interior of the cylinder means (2) into a first chamber (20) defined at least by the head of the piston and a second chamber (22) through which the piston rod extends; the first and second chambers being interconnected by first gas flow means (24) arranged to permit a restricted gas flow between the first and second chambers during a predetermined portion of the stroke of the piston and by second gas flow means (36,38) providing a second restricted gas flow path for by-passing the piston (10) when the piston is outside the predetermined portion of its stroke and as the piston rod (4) is moved towards an outer piston rod position by an externally applied force, the piston (10) being axially movable on the piston rod (4), the gas spring further comprising valve means (17) permitting gas pressure transfer between the first chamber and the second chamber when the piston rod (4) is moved towards an inner piston rod position by an externally applied force, characterised by the piston being axially movable on the piston rod (4) between an open position in which the second gas flow path (36,38) is open and a closed position in which the second gas flow path (36,38) is closed.

2. A gas compression spring according to claim 1, wherein the piston (10) is biassed into its closed position by biassing means (18) acting between the piston and the piston rod and is movable to its open position by gas pressure acting on the piston.

3. A gas compression spring according to claim 2, wherein the piston rod (4) extends through the piston (10) into the first chamber (20) and wherein the biassing means (18) acts generally between the head of the piston and a point on the piston rod which is within the first chamber.

4. A gas compression spring according to claim 2 or claim 3, wherein the biassing means is a coil spring (18) which abuts the piston head at one end and the distal end of which engages the piston rod at a point within the first chamber, whereby the piston head is biassed generally away from the first chamber.

5. A gas compression spring according to claim 4, wherein the distal end of the coil spring abuts an enlarged diameter portion (16) of the piston rod.

6. A gas compression spring according to any preceding claim, wherein the second gas flow path (38) passes between the piston and the piston rod.

7. A gas compression spring according to any preceding claim, wherein the piston rod carries rod sealing means (34) which enter an aperture (40) in the piston having a reduced cross-sectional area when the piston rod is in its closed position thereby closing the second gas flow path, and which enter an aperture in the piston having an enlarged cross-sectional area as the piston moves to its open position thereby opening the second gas flow path.

8. A gas compression spring according to any preceding claim, wherein the second valve means includes an inclined wedge surface (14) formed on the periphery of the piston which is arranged to press piston sealing means (12) against the interior of the cylinder means as the piston rod moves to an outer piston rod position thereby to effect sealing of the piston to the cylinder means, the piston sealing means (12) being arranged to move away from the wedge surface (14) as the piston rod moves to an inner piston rod position thereby permitting gas pressure transfer between the first chamber and the second chamber when the piston rod is moved towards an inner piston rod position by an externally applied force.

9. A gas compression spring according to any of claims 1 to 7, wherein the second valve means includes a resilient layer (52) surrounding the periphery of the piston and covered with separate piston sealing means (50) located generally concentrically between the resilient layer (52) and the interior of the cylinder means, the resilient layer (52) being arranged to press the piston sealing means (50) against the interior of the cylinder means as the piston rod moves to an outer piston rod position thereby to effect sealing of the piston to the cylinder means, the piston sealing means (50) and the resilient layer (52) being arranged to slide axially on the piston as the piston rod moves to an inner piston rod position to uncover an opening at one end of a third gas flow path (54) which interconnects the first and second chambers, thereby permitting gas pressure transfer between the first chamber and the second chamber when the piston rod is moved towards an inner piston rod position by an externally applied force.

10. A gas compression spring according to claim 9, wherein the piston sealing means (50) is harder than the resilient layer (52).

11. A gas compression spring for moving a member pivoted on a body from a first position corresponding to compression of the spring to a second position, comprising an arrangement of a piston rod (4) slidingly and sealingly extending outwardly of cylinder means (2) and carrying a piston (10) movable within the cylinder means (2); one of the piston rod (4) and the cylinder means (2) being adapted for connection to the body and the other thereof being adapted for connection to the member; the interior of the cylinder means (2) being filled with gas under pressure and the piston dividing the interior of the cylinder means into a first chamber (20) defined at least by the head of the piston and a second chamber (22) through which the piston rod (4) extends; the first and second chambers being interconnected by first gas flow means (24) arranged to permit a restricted gas flow between the first and second chambers during a predetermined portion of the stroke of the piston and by second gas flow means (36,38) providing a second restricted gas flow path for by-passing the piston when the piston is outside the predetermined portion of its stroke and as the piston rod is moved towards an outer piston rod position by an externally applied force, the gas spring further comprising second valve means permitting gas pressure transfer between the first chamber and the second chamber when the piston rod is moved towards an inner piston rod position by an externally applied force, characterised by the second gas flow means (36,38) comprising a pressure-sensitive first valve means (18,34,36) integral with the piston and operable to permit gas flow through the piston when a predetermined pressure difference between the gas pressure in the first and second chambers is exceeded and, the first valve means (18,34,36) including a valve closure axially movable on the piston rod between an open position in which flow through the first valve means between the chambers occurs and a closed position in which flow through the first valve means between the chambers does not occur, the valve closure being arranged to slide sealingly in the cylinder means.

12. A gas compression spring according to claim 11, wherein the closure is biassed into a closed position by a coil spring (18) which provides a biassing force between the piston rod and the closure.

13. A gas compression spring according to claim 11 or claim 12, wherein the valve closure is operable to remain generally stationary in the cylinder means and to permit the piston rod to pass through the valve closure towards an outer piston rod position as the first valve means opens.

14. A gas compression spring according to claim 13, wherein the valve closure is arranged to be held generally stationary in the cylinder means by gas pressure in the second chamber acting on the surface of the valve closure.

15. A gas compression spring for moving a member pivoted on a body from a first position corresponding to compression of the spring to a second position, comprising an arrangement of a piston (10) movable within cylinder means (2), the piston carrying a piston rod (4) slidingly and sealingly extending outwardly of the cylinder means; one of the piston rod (4) and the cylinder means (2) being adapted for connection to the body and the other thereof being adapted for connection to the member; the interior of the cylinder means being filled with gas under pressure and the piston dividing the interior of the cylinder means into a first chamber (20) defined at least by the head of the piston and a second chamber (22) through which the piston rod extends; the first and second chambers being interconnected by first gas flow means (24) arranged to permit a restricted gas flow between the first and second chambers during a predetermined portion of the stroke of the piston and by second gas flow means (36,38) providing a second restricted gas flow path for by-passing the piston as the piston rod is moved towards an outer piston rod position by an externally applied force when the piston is outside the predetermined portion of its stroke, characterised by the gas spring further comprising second valve means, including a biassing arrangement (14;52) which is arranged to press relatively hard piston sealing means (12;50) against the interior of the cylinder means as the piston rod moves to an outer piston rod position thereby to effect sealing of the piston to the cylinder means, the piston sealing means being arranged to move axially as the piston rod moves to an inner piston rod position thereby permitting gas pressure transfer between the first chamber and the second chamber when the piston rod is moved towards an inner piston rod position by an externally applied force.

16. A gas compression spring according to claim 15, wherein the biassing arrangement includes an inclined wedge surface (14) formed on the periphery of the piston which is arranged to press the piston sealing means against the interior of the cylinder means as the piston rod moves to an outer piston rod position, the piston sealing means (12) being arranged to move away from the wedge surface as the piston rod moves to an inner piston rod position thereby permitting gas pressure transfer between the first chamber and the second chamber.

17. A gas compression spring according to claim 15, wherein the biassing arrangement includes a resilient layer (52) surrounding the periphery of the piston and wherein the piston sealing means (50) is a separate relatively hard sealing layer located generally radially between the resilient layer and the interior of the cylinder means, the resilient layer being arranged to press the sealing layer against the interior of the cylinder means as the piston rod moves to an outer piston rod position thereby to effect sealing of the piston to the cylinder means, the sealing layer and the resilient layer being arranged to slide axially on the piston as the piston rod moves to an inner piston rod position to uncover an opening at one end of a third gas flow path which interconnects the first and second chambers, thereby permitting gas pressure transfer between the first chamber and the second chamber.
